# EUROPÄISCHE PATENTSCHRIFT

(11) **EP 2 856 102 B1**
(45) Veröffentlichungstag und Bekanntmachung des Hinweises auf die Patenterteilung: **14.09.2016**
(21) Anmeldenummer: 13714558.7
(22) Anmeldetag: 04.04.2013
(51) Int. Cl.: G01N 1/06

(54) **MIKROTOM UND VERFAHREN ZUR STEUERUNG EINER SCHUTZVORRICHTUNG EINES MIKROTOMS**
MICROTOME AND METHOD FOR PRODUCING A PROTECTIVE DEVICE OF A MICROTOME
MICROTOME ET PROCÉDÉ DE COMMANDE D'UN DISPOSITIF DE PROTECTION D'UN MICROTOME

(30) Priorität: 25.05.2012 DE 102012010275
(43) Veröffentlichungstag der Anmeldung: 08.04.2015
(73) Patentinhaber: Microm International GmbH, 63303 Dreieich (DE)
(72) Erfinder: JOHE, Roland, 69412 Eberbach (DE)
(74) Vertreter: Lichti - Patentanwälte Partnerschaft mbB
(86) Internationale Anmeldenummer: PCT/EP2013/000998
(87) Internationale Veröffentlichungsnummer: WO 2013/174465

(56) Entgegenhaltungen:
- EP-A2- 2 282 191
- DE-A1- 19 824 024
- DE-A1-102004 051 974
- US-A- 1 925 181

## Beschreibung

Die Erfindung betrifft ein Mikrotom gemäß dem Oberbegriff des Anspruchs 1. Darüber hinaus betrifft die Erfindung ein Verfahren zur Steuerung einer Schutzvorrichtung eines Messers eines entsprechenden Mikrotoms.

Ein Mikrotom ist ein Schneidegerät, mit dem von einer Probe, beispielsweise einer Gewebeprobe, mittels eines sehr scharfen Messers eine dünne Schicht abgeschnitten bzw. abgehobelt wird, die dann weiter bearbeitet und später mikroskopiert werden kann. Nach Erstellen eines oder mehrerer Schnittpräparate wird die Gewebeprobe ausgebaut und durch eine neue Gewebeprobe ersetzt. Beim Ein- und Ausbau der Gewebeprobe besteht die Gefahr, dass sich der Benutzer an dem sehr scharfen Messer schneidet. Um dies zu vermeiden, ist bei einem Mikrotom üblicherweise ein schwenkbarer Schutzbügel vorgesehen, der von dem Benutzer manuell in eine die Schneide des Messers überdeckende Schutzstellung gebracht werden kann. Dies unterbleibt jedoch in vielen Fällen aus Bequemlichkeit oder aus Zeitmangel, weshalb an Mikrotomen relativ viele Schnittverletzungen des Benutzers auftreten. In der US 1,925,181 A, von der im Oberbegriff des Anspruchs 1 ausgegangen wird, ist ein Mikrotom beschrieben, das einen Schutzbügel für die Messerschneide aufweist, der schwenkbar gelagert ist und in der Normalstellung des Mikrotoms die Messerschneide überdeckt. Wenn der Probehalter mit der Probe nach unten bewegt wird, kommt ein Vorsprung mit einem Anschlag in Kontakt und drückt den Schutzbügel unter gleichzeitiger Schwenkung nach unten in eine Freigabestellung. Wenn der Probenhalter wieder nach oben bewegt wird, wird der Schutzbügel infolge der Wirkung einer Feder wieder in seine die Messerschneide überdeckende Schutzstellung gebracht. Somit schwenkt der Schutzbügel bei jeder Schnittbewegung des Mikrotoms zwischen der Freigabestellung und der Schutzstellung hin und her, womit eine hohe mechanische Beanspruchung und somit ein großer Verschleiß verbunden sind.

Wenn der Benutzer die Schneide reinigen möchte, muss er den Probehalter möglichst weit entfernt von der Schneide positionieren, um aufgrund der beengten Platzverhältnisse Zugriff auf die Schneide zu haben. In dieser Stellung des Probehalters befindet sich der Schutzbügel bei dem Mikrotom gemäß der US 1,925,181 A jedoch immer in seiner die Messerschneide überdeckenden Schutzstellung, so dass der Benutzer den Schutzbügel manuell erfassen und entgegen der Kraft der Feder in seine Freigabestellung zurückschwenken und in dieser halten muss. Somit steht ihm zur Reinigung der Schneide nur noch eine Hand zur Verfügung, wodurch die Reinigung der Schneide mühsam und umständlich ist. Darüber hinaus ist dadurch die Verletzungsgefahr für den Benutzer wesentlich erhöht.

Die DE 198 24 024 A1 zeigt ein Mikrotom, bei dem für die Schneidkante des Messers ein zusätzlicher Klingenschutz vorgesehen ist, der zwischen einer Schutzstellung und einer Freigabestellung verschwenkt werden kann. Zusätzlich besitzt das Mikrotom den üblicherweise vorhandenen schwenkbaren Bügel.

Der Erfindung liegt die Aufgabe zugrunde, ein Mikrotom der genannten Art zu schaffen, bei dem die Verletzungsgefahr für den Benutzer herabgesetzt ist. Darüber hinaus soll ein Verfahren zur Steuerung einer Schutzvorrichtung eines Messers eines Mikrotoms geschaffen werden, das sich in einfacher Weise ausführen lässt und mit dem die Verletzungsgefahr für den Benutzer verringert ist.

Diese Aufgabe wird hinsichtlich des Mikrotoms durch die Merkmale des Anspruchs 1 gelöst. Dabei ist vorgesehen, dass Zustandsparameter des Mikrotoms mittels zumindest eines Sensors erfassbar und in einer Steuervorrichtung auswertbar sind und dass die Antriebsvorrichtung von der Steuervorrichtung in Abhängigkeit von zumindest einem Zustandsparameter des Mikrotoms ansteuerbar ist.

Es wird von der Grundüberlegung ausgegangen, den Betriebszustand des Mikrotom zu überwachen bzw. zu erfassen, indem ein oder mehrere Zustandsparameter des Mikrotoms erfasst werden. Die entsprechenden Daten werden einer Auswertevorrichtung oder der Steuervorrichtung zugeführt und in Abhängigkeit von den Zustandsparametern wird die Schutzvorrichtung entweder in die das Messer abdeckende Schutzstellung gebracht, in der der Benutzer vor Schnittverletzungen geschützt ist, oder verbleibt in der Freigabestellung, in der die Probe geschnitten werden kann.

Dabei ist mittels des Sensors eine Relativbewegung zwischen dem Probenhalter und dem Messer erfassbar. Üblicherweise ist das Messer feststehend ausgebildet, während der Probenhalter eine alternierende Hin- und Herbewebung ausführt, die in ihren Endbereichen durch eine zusätzliche senkrecht dazu verlaufende Zustell- bzw. Rückzugsbewegung überlagert wird. Erfindungsgemäß wird überwacht, ob in einem vorbestimmten Zeitraum eine Relativbewegung zwischen dem Probenhalter und dem Messer auftritt. Wenn innerhalb des vorbestimmen Zeitraums keine Relativbewegung festgestellt wird, wird davon ausgegangen, dass die Probenbearbeitung abgeschlossen oder zumindest unterbrochen ist und mittels der Steuervorrichtung wird die Antriebsvorrichtung aktiviert, die die Schutzvorrichtung in die Schutzstellung bringt.

In einer alternativen Ausgestaltung der Erfindung ist vorgesehen, dass mittels des Sensors die Position des Probenhalters erfassbar ist. Wenn der Benutzer den Probenhalter in eine vorbestimmte Position fährt, in der der Probenhalter üblicherweise möglichst weit vom Messer entfernt ist, um ausreichend Raum für das Auswechseln der Probe zu haben, kann das Anfahren dieser vorbestimmten Position erfasst werden. Sobald festgestellt wird, dass der Probenhalter die vorbestimmte Position erreicht, aktiviert die Steuervorrichtung die Antriebsvorrichtung der Schutzvorrichtung und verstellt diese in die Schutzstellung.

Bei der Schutzvorrichtung handelt es sich vorzugsweise um einen an sich bekannten Bügel, der über eine Schneide des Messers gelegt werden kann. Der Bügel kann verschiebbar oder insbesondere schwenkbar gelagert sein.

Wenn die Steuervorrichtung feststellt, dass die Schutzvorrichtung aufgrund der aktuellen Zustandsparameter des Mikrotoms in die Schutzstellung zu bringen ist, wird die Antriebsvorrichtung aktiviert, die die Bewegung oder Verstellung der Schutzvorrichtung bewirkt. Bei der Antriebsvorrichtung kann es sich um einen Elektromotor, einen elektromagnetischen Antrieb oder auch um eine Feder handeln. Bei Verwendung eines Elektromotors oder eines elektromagnetischen Antriebs kann die Schutzvorrichtung zwischen der Schutzstellung und der Freigabestellung beliebig verstellt werden.

Bei Verwendung einer Feder kann insbesondere vorgesehen sein, dass die Schutzvorrichtung in der Freigabestellung unter Federvorspannung gehalten, jedoch durch zumindest einen Anschlag an einer Verstellung in die Schutzstellung gehindert ist. Mittels der Steuervorrichtung kann der Anschlag aufgehoben oder freigegeben werden, so dass die Schutzvorrichtung infolge der Federkraft in die Schutzstellung bewegt wird.

Als Zustandsparameter des Mikrotoms, von denen die Verstellung der Schutzvorrichtung in die Schutzstellung abhängig ist, kommen verschiedene Parameter in Frage, die einzeln oder in Kombination berücksichtigt werden können.

Wenn der Probenhalter für den Schnittvorgang hin und her bewegt wird, kann dies entweder mittels einer manuell zu betätigenden Kurbel oder mittels eines Elektromotors erfolgen. Dabei kann vorgesehen sein, dass der Sensor die Betriebsparameter des Elektromotors erfasst. Wenn festgestellt wird, dass der Elektromotor ruht und somit der Probenhalter nicht angetrieben ist, aktiviert die Steuervorrichtung die Antriebsvorrichtung der Schutzvorrichtung, wodurch diese in die Schutzstellung verstellt wird.

In gleichartiger Weise kann auch die Bewegung der Handkurbel erfasst werden, wobei bei einem Stillstand der Handkurbel eine Verstellung der Schutzvorrichtung in die Schutzstellung erfolgt.

Um den Probenhalter während des Auswechselns der Probe sicher zu halten, kann dem Probenhalter in Weiterbildung der Erfindung eine Feststellvorrichtung beispielsweise in Form einer Bremse oder einer Rastung zugeordnet sein, mittels der er in einer vorbestimmten Position festlegbar ist. Mittels des Sensors kann der Betriebszustand der Feststellvorrichtung erfasst werden. Wenn festgestellt wird, dass der Probenhalter fixiert ist, wird die Antriebsvorrichtung in genannter Weise aktiviert und verstellt die Schutzvorrichtung in die Schutzstellung.

Nach dem Auswechseln der Probe muss die Schutzvorrichtung aus der Schutzstellung wieder in die Freigabestellung zurückgestellt werden. Dies kann manuell beispielsweise unter gleichzeitiger Vorspannung der genannten Feder erfolgen, vorzugsweise ist jedoch vorgesehen, dass die Schutzvorrichtung mittels der Antriebsvorrichtung von der Schutzstellung in die Freigabestellung bringbar ist. Dies ist auch notwendig, wenn das Messer ausgewechselt werden soll.

Hinsichtlich des Verfahrens wird die oben genannte Aufgabe dadurch gelöst, dass Zustandsparameter des Mikrotoms mittels eines Sensors erfasst und in einer Steuervorrichtung ausgewertet werden, wobei überwacht wird, ob in einem vorbestimmten Zeitraum eine Relativbewegung zwischen dem Probenhalter und dem Messer auftritt und/oder ob der Probenhalter sich in einer vorbestimmten Position zum Auswechseln der Probe befindet, und dass die Schutzvorrichtung in Abhängigkeit von den Zustandsparametern mittels einer Antriebsvorrichtung in eine das Messer zumindest teilweise abdeckende Schutzstellung gebracht wird.

Weitere Merkmale und Ausgestaltungsmöglichkeiten des Verfahrens ergeben sich aus der oben stehenden bzw. folgenden Beschreibung, auf die zwecks Vermeidung von Wiederholungen verwiesen wird.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine schematische Darstellung wesentlicher Teile eines Mikrotoms mit einer Schutzvorrichtung in Freigabestellung,
- Fig. 2: das Mikrotom gemäß Figur 1 mit der Schutzvorrichtung in Schutzstellung
- Fig. 3: eine Darstellung einer Abwandlung des Mikrotoms gemäß Figur 1 mit der Schutzvorrichtung in Freigabestellung und
- Fig. 4: das Mikrotom gemäß Figur 3 mit der Schutzvorrichtung in Schutzstellung.

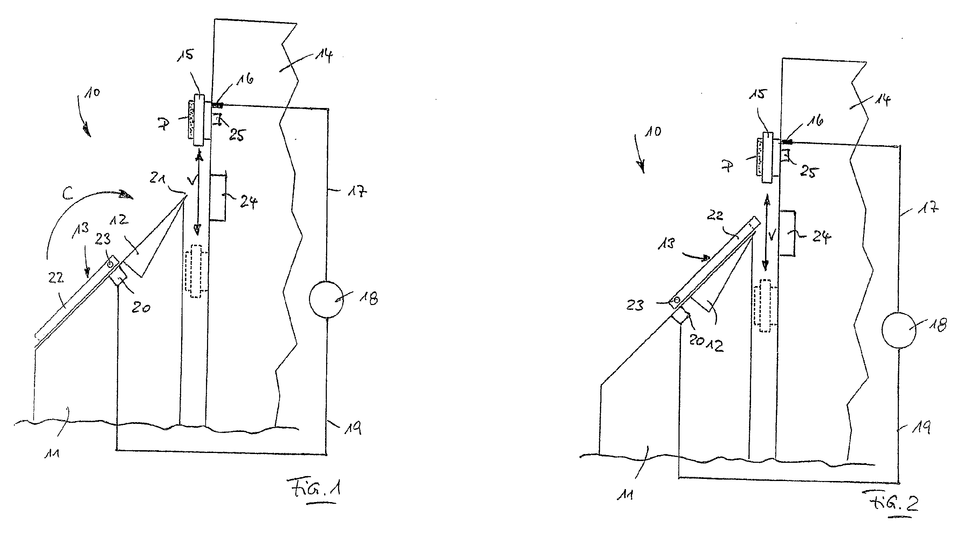

Figur 1 zeigt ein Mikrotom 10 in schematischer Darstellung mit einem Messerhalter 11, an dem ein Messer 12 fixiert ist, das eine Schneide 21 aufweist. An dem Messerhalter 11 ist des weiteren eine Schutzvorrichtung 13 in Form eines Bügels 22 angeordnet, der um ein Schwenklager 23 schwenkbar ist, wobei die durch den Pfeil C angedeutete Schwenkbewegung durch eine Antriebsvorrichtung 20 bewirkt wird. Der Bügel 22 kann aus der in Figur 1 dargestellten Freigabestellung, in der er neben bzw. unterhalb des Messers 12 angeordnet ist, in die in Figur 2 dargestellte Schutzstellung bewegt werden, in der der Bügel 22 die Schneide 21 des Messers 12 abdeckt.

Ein Gehäuse 14 trägt auf seiner dem Messer 12 zugewandten Seite einen Probenhalter 15, der mittels einer Antriebsvorrichtung 24, beispielsweise eines Elektromotors, vertikal hin und her bewegbar ist, wie es durch den Doppelpfeil V angedeutet ist. An dem Probenhalter 15 ist eine Gewebeprobe P angebracht. In Figur 1 ist der Probenhalter 15 in einer oberen Endposition dargestellt, aus der er in eine gestrichelt dargestellte untere Endposition verfahren werden kann. Bei dieser Bewegung hobelt das Messer 12 von der Probe P eine dünne Scheibe ab, die weiter bearbeitet wird.

In der oberen Endposition ist für den Probenhalter 15 eine Feststellvorrichtung 25 vorgesehen, mit der der Probenhalter 15 in seiner Endposition fixiert werden kann.

Nahe der oberen Endposition des Probenhalters 15 ist ein Sensor 16 angeordnet, mit dem festgestellt werden kann, ob der Probenhalter 15 sich in der oberen Endposition befindet und in dieser stillsteht bzw. mittels der Feststellvorrichtung 25 fixiert ist.

Der in Figur 1 dargestellte Sensor stellt nur ein mögliches Ausführungsbeispiel da, um einen Betriebszustand bzw. Zustandsparameter des Mikrotoms 10 zu erfassen. Alternativ oder zusätzlich können auch andere Sensoren zur Erfassung anderer Zustandsparameter vorgesehen sein, wie sie bereits oben beschrieben wurden.

Der Sensor 16 steht über einer Leitung 17 mit einer Steuervorrichtung 18 bzw. einer Auswerteeinheit in Verbindung, die über eine Leitung 19 mit der Antriebsvorrichtung 20 der Schutzvorrichtung 13 verbunden ist. Wenn mittels des Sensors 16 festgestellt wird, dass der Probenhalter 15 in der oberen Endposition für zumindest eine vorbestimmte Zeitdauer stillsteht, wird die Antriebsvorrichtung 20 von der Steuervorrichtung 18 über die Leitung 19 aktiviert, wodurch die Schutzvorrichtung 13 aus der in Figur 1 dargestellten Freigabestellung in die in Figur 2 dargestellte Schutzstellung schwenkt, wie es durch den Pfeil C angedeutet ist. In dieser Stellung kann der Benutzer die Probe P auswechseln, ohne dass die Gefahr einer Verletzung an dem Messer 12 besteht.

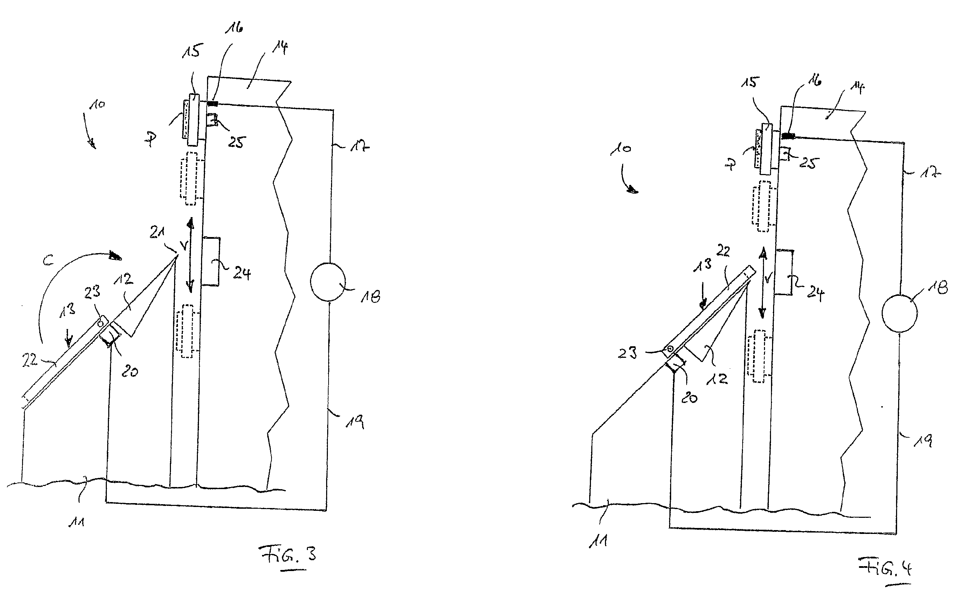

Das in den Figuren 3 und 4 dargestellte Ausführungsbeispiels ist dem Ausführungsbeispiel gemäß den Figuren 1 und 2 sehr ähnlich und unterscheidet sich von diesem lediglich dadurch, dass der Probenhalter 15 aus seiner oberen Endposition, die er während des Schneidvorgangs der Probe P erreicht, in eine gemäß Figur 3 oberhalb davon liegende und noch weiter vom Messer 12 entfernte Austauschposition verstellt werden kann, die in den Figuren 3 und 4 durchgezogen dargestellt ist. Mittels des Sensors 16 wird erfasst, dass der Probenhalter 15 die Austauschposition erreicht hat und in dieser verharrt, woraufhin die Schutzvorrichtung 13 in genannter Weise aktiviert und in die das Messer 12 abdeckende Schutzstellung gebracht wird, wie es in Figur 4 dargestellt ist.

Sobald die Gewebeprobe P ausgetauscht wurde, kann der Benutzer den Bügel 22 der Schutzvorrichtung 13 entweder manuell aus der Schutzstellung in die Freigabestellung zurückschwenken oder die Antriebsvorrichtung 20 wird entsprechend aktiviert und schwenkt den Bügel 22 in die Freigabestellung, woraufhin von der neuen Probe dünne Schnitte abgehobelt werden können.

## Patentansprüche

1. Mikrotom (10) mit einem Messer (12) und einem Probenhalter (15) für eine Probe (P), wobei der Probenhalter (15) relativ zum Messer (12) verstellbar ist, und mit einer Schutzvorrichtung (13) für das Messer (12), die zwischen einer das Messer (12) zumindest teilweise abdeckenden Schutzstellung und einer das Messer (12) freigebenden Freigabestellung verstellbar ist, wobei der Schutzvorrichtung (13) eine Antriebsvorrichtung (20) zugeordnet ist, mittels der die Schutzvorrichtung (13) zumindest aus der Freigabestellung in die Schutzstellung bringbar ist, **dadurch gekennzeichnet, dass** Zustandsparameter des Mikrotoms (10) mittels zumindest eines Sensors (16) erfassbar und in einer Steuervorrichtung (18) auswertbar sind und dass die Antriebsvorrichtung (20) von der Steuervorrichtung (18) in Abhängigkeit von zumindest einem Zustandsparameter des Mikrotoms (10) ansteuerbar ist, wobei mittels des Sensors (16) eine Relativbewegung zwischen dem Probenhalter (15) und dem Messer und/oder die Position des Probenhalters (15) erfassbar ist.

2. Mikrotom nach Anspruch 1, **dadurch gekennzeichnet, dass** die Schutzvorrichtung (13) ein Bügel (22) ist, der über eine Schneide (21) des Messers (12) legbar ist.

3. Mikrotom nach Anspruch 2, **dadurch gekennzeichnet, dass** der Bügel (22) schwenkbar ist.

4. Mikrotom nach einem der Ansprüche 1 bis 3, **dadurch gekennzeichnet, dass** die Antriebsvorrichtung (20) ein Elektromotor, ein elektromagnetischer Antrieb oder eine Feder ist.

5. Mikrotom nach einem der Ansprüche 1 bis 4, **dadurch gekennzeichnet, dass** der Probenhalter (15) mittels eines Elektromotors (24) angetrieben ist und dass mittels des Sensors (16) der Betriebszustand des Elektromotors (24) erfassbar ist.

6. Mikrotom nach einem der Ansprüche 1 bis 5, **dadurch gekennzeichnet, dass** dem Probenhalter (15) eine Feststellvorrichtung (25) zugeordnet ist, mittels der er in einer vorbestimmen Position fixierbar ist, und dass mittels des Sensors (16) der Betriebszustand der Feststellvorrichtung (25) erfassbar ist.

7. Mikrotom nach einem der Ansprüche 1 bis 6, **dadurch gekennzeichnet, dass** die Schutzvorrichtung (13) mittels der Antriebsvorrichtung (20) von der Schutzstellung in die Freigabestellung bringbar ist.

8. Verfahren zur Steuerung einer Schutzvorrichtung (13) eines Messers (12) eines Mikrotoms (10) gemäß Anspruch 1, **dadurch gekennzeichnet, dass** Zustandsparameter des Mikrotoms (10) mittels eines Sensors (16) erfasst und in einer Steuervorrichtung (18) ausgewertet werden, wobei überwacht wird, ob in einem vorbestimmten Zeitraum eine Relativbewegung zwischen dem Probenhalter (15) und dem Messer (12) auftritt und/oder ob der Probenhalter (15) sich in einer vorbestimmten Position zum Auswechseln der Probe (P) befindet, und dass die Schutzvorrichtung (13) in Abhängigkeit von den Zustandsparametern mittels einer Antriebsvorrichtung (20) in eine das Messer (12) zumindest teilweise abdeckende Schutzstellung gebracht wird.

## Claims

1. Microtome (10) with a knife (12) and with a specimen holder (15) for a specimen (P), wherein the specimen holder (15) is adjustable relative to the knife (12), and with a safety device (13) for the knife (12), which is adjustable between a protective position, in which it covers the knife (12) at least partially, and a release position, in which it releases the knife (12), wherein a driving device (20), by means of which the safety device (13) can be brought at least from the release position into the protective position, is associated with the safety device (13), **characterized in that** status parameters of the microtome (10) can be detected by means of at least one sensor (16) and analyzed in a control device (18), and that the driving device (20) can be actuated by the control device (18) as a function of at least one status parameter of the microtome (10), wherein relative motion between the specimen holder (15) and the knife and/or the position of the specimen holder (15) can be detected by means of the sensor (16).

2. Microtome in accordance with claim 1, **characterized in that** the safety device (13) is a strap (22), which can be placed over a blade (21) of the knife (12).

3. Microtome in accordance with claim 2, **characterized in that** the strap (22) is pivotable.

4. Microtome in accordance with one of the claims 1 through 3, **characterized in that** the driving device (20) is an electric motor, an electromagnetic drive or a spring.

5. Microtome in accordance with one of the claims 1 through 4, **characterized in that** the specimen holder (15) is driven by means of an electric motor (24) and that the operating state of the electric motor (24) can be detected by means of the sensor (16).

6. Microtome in accordance with one of the claims 1 through 5, **characterized in that** a fixing device (25), by means of which the specimen holder (25) can be fixed in a predetermined position, is associated with the specimen holder (15), and that the operating state of the fixing device (25) can be detected by means of the sensor (16).

7. Microtome in accordance with one of the claims 1 through 6, **characterized in that** the safety device (13) can be brought from the protective position into the release position by means of the driving device (20).

8. Method for controlling a safety device (13) of a knife (12) of a microtome (10) in accordance with claim 1, **characterized in that** status parameters of the microtome (10) are detected by means of a sensor (16) and analyzed in a control device (18), wherein a monitoring is performed to determine whether a relative motion takes place between the specimen holder (15) and the knife (12) during a predetermined time period and/or whether the specimen holder (15) is in a predetermined position for replacing the specimen (P), and that the safety device (13) is brought by means of a driving device (20) into a protective position, in which it covers the knife (12) at least partially, as a function of the status parameters.

## Revendications

1. Microtome (10) avec un couteau (12) et un porte-échantillon (15) pour un échantillon (P), le porte-échantillon (15) pouvant être déplacé par rapport au couteau (12) et avec un dispositif de protection (13) pour le couteau (12) pouvant être déplacé entre une position de protection recouvrant au moins en partie le couteau (12) et une position de libération libérant le couteau (12), un dispositif d'entraînement (20) étant associé au dispositif de protection (13) et servant à amener le dispositif de protection (13) au moins de la position de libération dans la position de protection, **caractérisé en ce que** les paramètres d'état du microtome (10) peuvent être déterminés à l'aide d'au moins un capteur (16) et être analysés dans un dispositif de commande (18) et que le dispositif d'entraînement (20) peut être commandé par le dispositif de commande (18) en fonction d'au moins un paramètre d'état du microtome (10), un mouvement relatif entre le porte-échantillon (15) et le couteau et/ou la position du porte-échantillon (15) pouvant être déterminés à l'aide du capteur (16).

2. Microtome selon la revendication 1, **caractérisé en ce que** le dispositif de protection (13) est un étrier (22) pouvant être placé au-dessus d'une lame (21) du couteau (12).

3. Microtome selon la revendication 2, **caractérisé en ce que** l'étrier (22) peut pivoter.

4. Microtome selon l'une quelconque des revendications 1 à 3, **caractérisé en ce que** le dispositif d'entraînement en entrée (20) est un moteur électrique, un entraînement électromagnétique ou un ressort.

5. Microtome selon l'une quelconque des revendications 1 à 4, **caractérisé en ce que** le porte-échantillon (15) est entraîné à l'aide d'un moteur électrique (24) et que l'état de fonctionnement du moteur électrique (24) peut être déterminé à l'aide du capteur (16).

6. Microtome selon l'une quelconque des revendications 1 à 5, **caractérisé en ce qu'**un dispositif de détection (25) est associé au porte-échantillon (15), ledit dispositif permettant de fixer le porte-échantillon dans une position prédéterminée et l'état de fonctionnement du dispositif de détermination (25) pouvant être déterminé à l'aide du capteur (16).

7. Microtome selon l'une quelconque des revendications 1 à 6, **caractérisé en ce que** le dispositif de protection (13) peut être amené de la position de protection dans la position de libération à l'aide du dispositif d'entraînement en entrée (20).

8. Procédé de commande d'un dispositif de protection (13) d'un couteau (12) d'un microtome (10) selon la revendication 1, **caractérisé en ce que** les paramètres d'état du microtome (10) sont déterminés à l'aide d'un capteur (16) et sont analysés dans un dispositif de commande (18), sachant que l'on surveille si dans un laps de temps prédéterminé un mouvement relatif se produit entre le porte-échantillon (15) et le couteau (12) et/ou si le porte-échantillon (15) se trouve dans une position prédéterminée de remplacement de l'échantillon (P) et que le dispositif de protection (13) est amené, en fonction des paramètres d'état, à l'aide d'un dispositif d'entraînement (20), dans une position de protection recouvrant au moins en partie le couteau (12).
